# EUROPEAN PATENT APPLICATION

(11) **EP 4 607 019 A1**
(43) Date of publication of application: **27.08.2025**
(21) Application number: 25152386.6
(22) Date of filing: 16.01.2025
(51) Int. Cl.: F02D 41/06, F01N 3/20, F01N 9/00, F02D 41/14, F02D 43/00

(54) **ENGINE SYSTEM**

(30) Priority: 21.02.2024 JP 2024024454
(71) Applicant: MAZDA MOTOR CORPORATION, Hiroshima 730-8670 (JP)
(72) Inventor: Matsuo, Takeru, Fuchu-cho, Aki-gun, 730-8670 (JP); Minamoto, Hiroshi, Fuchu-cho, Aki-gun, 730-8670 (JP); Miyazaki, Masahiro, Fuchu-cho, Aki-gun, 730-8670 (JP); Nakano, Yohei, Fuchu-cho, Aki-gun, 730-8670 (JP); Wada, Tomoyuki, Fuchu-cho, Aki-gun, 730-8670 (JP); Yoshida, Sotaro, Fuchu-cho, Aki-gun, 730-8670 (JP); Takaki, Kentaro, Fuchu-cho, Aki-gun, 730-8670 (JP)
(74) Representative: Müller-Boré & Partner Patentanwälte PartG mbB

(57) **Abstract**

An adjustment apparatus (9) which adjusts an engine output or engine torque and selective reduction catalysts (42 and 43) which adsorb ammonia and reduce NOx in exhaust gas by using the ammonia are provided, restriction control for controlling the adjustment apparatus is carried out such that in a case where temperatures of the selective reduction catalysts are lower than a predetermined determination catalyst temperature, an upper limit value of the engine output or the engine torque is set to a lower value than a maximum value and the engine output or the engine torque has a value equal to or lower than the upper limit value, and in carrying out the restriction control, the upper limit value is set to a lower value when an initial adsorption amount is small than when that is large.

## Description

### [Technical Field]

The present invention relates to an engine system and a method of controlling an engine system. The present invention also relates to a computer program product.

### [Background Art]

In related art, as for engines or the like installed in vehicles, discussions have been held about reduction in a discharge amount of harmful substances, in other words, an improvement in exhaust performance. For example, Patent Literature 1 discloses an engine including a catalyst apparatus, the engine reducing an intake air amount in order to reduce a discharge amount of a harmful substance when a temperature of a catalyst apparatus is low and a purification capability for exhaust gas by the catalyst apparatus is low.

### [Citation List]

### [Patent Literature]

[Patent Literature 1] Japanese Patent No. 3000804

### [Summary]

### [Problems to be Solved by the Invention]

As described above, because when an intake air amount is decreased, combustion gas generated in an engine body and thus an amount of exhaust gas can be suppressed to a small amount, a discharge amount of a harmful substance can be decreased.

However, in a selective reduction catalyst which adsorbs ammonia and thereby reduces NOx, a purification capability changes in accordance with a temperature of the selective reduction catalyst and further an ammonia adsorption amount, in other words, an amount of adsorbed ammonia. Thus, in a configuration in which the intake air amount is changed simply in accordance with a catalyst temperature, there is a possibility that the discharge amount of the harmful substance cannot sufficiently be reduced when an engine is started.

Specifically, the selective reduction catalyst has properties that the selective reduction catalyst is less likely to adsorb ammonia when a temperature of the selective reduction catalyst is high than when the temperature is low. Thus, in a first case where the engine is stopped in a state where the temperature of the selective reduction catalyst is comparatively low, a next engine start is performed in a state where the ammonia adsorption amount is comparatively large, and the purification capability of the selective reduction catalyst at a time after the engine start thereby becomes comparatively high. On the other hand, in a second case where the engine is stopped in a state where the temperature of the selective reduction catalyst is high, even if the temperature of the selective reduction catalyst at the engine start is the same as that of the above first case, the engine start is performed in a state where the ammonia adsorption amount is small, and as a result the purification capability of the selective reduction catalyst at a time after the engine start thereby becomes low. Consequently, in the configuration in which the intake air amount is changed only in accordance with the catalyst temperature, there is a possibility that proper exhaust performance cannot be achieved.

The present invention has been made in consideration of the above-described circumstance, and an object thereof is to achieve proper exhaust performance.

### [Means for Solving the Problems]

The above-described problem is solved by the invention as defined in independent claims. Particularly, an engine system includes: an adjustment apparatus which adjusts an engine output or engine torque; a catalyst, e.g., a selective reduction catalyst, which adsorbs ammonia and reduces NOx in exhaust gas by using the ammonia; and a control apparatus which controls the adjustment apparatus. The control apparatus carries out restriction control for controlling the adjustment apparatus in a case where a temperature of the selective reduction catalyst is lower than a predetermined determination catalyst temperature, such that an upper limit value of the engine output or the engine torque is set to a lower value than a maximum value and the engine output or the engine torque has a value equal to or lower than the upper limit value. In carrying out the restriction control, the control apparatus may set the upper limit value to a lower value when an initial adsorption amount as an amount of ammonia, which is adsorbed on the selective reduction catalyst at an engine start, is small than when the initial adsorption amount is large. In other words, the control apparatus sets the upper limit value to a lower value as an initial adsorption amount, which is adsorbed on the selective reduction catalyst at an engine start, becomes smaller.

In the present invention, in a case where the temperature of the selective reduction catalyst is lower than the predetermined determination catalyst temperature, the engine output or the engine torque is suppressed or limited to the upper limit value or lower, the upper limit value being lower than the maximum value. Thus, a situation can be avoided where a large amount of NOx (nitrogen oxides) is supplied to the selective reduction catalyst in a state where its purification capability is low due to a low temperature, and an amount of NOx which is discharged to the outside without being purified by the selective reduction catalyst can be suppressed to a small amount.

Furthermore, the upper limit value is set to a lower value when the initial adsorption amount as the amount of ammonia, which is adsorbed on the selective reduction catalyst at the engine start, is small than when the initial adsorption amount is large. In other words, the upper limit value is set to a lower value as the initial adsorption amount becomes smaller. Thus, after the engine start, when the purification capability of the selective reduction catalyst is comparatively high due to a large initial adsorption amount, while NOx is purified by the selective reduction catalyst, excessive lowering of the engine output or the engine torque can be avoided. Further, after the engine start, when the purification performance of the selective reduction catalyst is comparatively low due to a small initial adsorption amount, combustion gas generated in an engine body and thus a NOx amount can be suppressed or reduced to small amounts, and proper exhaust performance can be achieved.

The control apparatus may set a target adsorption amount as a target value of the amount of ammonia to be adsorbed on the selective reduction catalyst. For example, the control apparatus set the upper limit value to a lower value when the restriction control is carried out and the initial adsorption amount is smaller than the target adsorption amount than when the initial adsorption amount is equal to or greater than the target adsorption amount, and makes the upper limit value lower as the initial adsorption amount becomes smaller. Particularly, when the restriction control is carried out and the initial adsorption amount is smaller than the target adsorption amount, the control apparatus sets the upper limit value to a value lower than a value set when the initial adsorption amount is equal to or greater than the target adsorption amount, and makes the upper limit value lower as the initial adsorption amount becomes smaller.

In this configuration, in a case where the initial adsorption amount is large and the target adsorption amount is realized and where an exhaust gas purification capability in the selective reduction catalyst is secured, the above upper limit value is set to a comparatively high value. Thus, the engine output or the engine torque can be secured while NOx is purified by the selective reduction catalyst. Further, when the initial adsorption amount is small and the amount of ammonia adsorbed on the selective reduction catalyst is deficient with respect to the target adsorption amount, the above upper limit value is set to a comparatively low value, and a generation amount of NOx can be suppressed to a small amount. Thus, the amount of NOx which slips through the selective reduction catalyst and is discharged to the outside of an engine can certainly be decreased. In addition, under a condition where the initial adsorption amount is smaller than the target adsorption amount, the upper limit value is set to a lower value as the initial adsorption amount becomes smaller. Thus, even when the initial adsorption amount changes in a range which is smaller than the target adsorption amount, the upper limit value can be set to an appropriate value, and proper exhaust performance can be achieved while excessive lowering of the engine output or the engine torque is prevented.

The control apparatus may set the upper limit value such that the upper limit value becomes lower when the temperature of the selective reduction catalyst is low than when the temperature is high. In other words, the control apparatus may set the upper limit value such that the upper limit value becomes lower as the temperature of the selective reduction catalyst becomes lower.

In this configuration, the above upper limit value can be set to an appropriate value which corresponds to the purification capability of the selective reduction catalyst which changes in accordance with the temperature of the selective reduction catalyst. Consequently, while proper exhaust performance is achieved, the engine output or the engine torque can more reliably be prevented from becoming excessively low.

The engine system may include: a urea injector which injects urea into an exhaust passage on an upstream side relative to the selective reduction catalyst; and a NOx concentration detection apparatus which is disposed in the exhaust passage on the upstream side relative to the selective reduction catalyst and detects a NOx concentration in the exhaust gas. The control apparatus may estimate or calculate the amount of ammonia, which is adsorbed on the selective reduction catalyst, based on an amount of urea which is injected by the urea injector and on the NOx concentration which is detected by the NOx concentration detection apparatus and set the ammonia amount, which is estimated at an engine stop, as the initial adsorption amount at a next engine start.

The amount of ammonia which is adsorbed on the selective reduction catalyst can be calculated from the difference between the amount of ammonia which is supplied to the selective reduction catalyst and the amount of ammonia which is consumed in the selective reduction catalyst for reducing NOx. Thus, in this configuration, because the initial adsorption amount is estimated based on the amount of urea injected by the urea injector, which is a value having a high correlation with the amount of supplied ammonia, and on the NOx concentration detected by the NOx concentration detection apparatus, which is a value having a high correlation with the amount of ammonia consumed in the selective reduction catalyst, the initial adsorption amount can precisely be estimated.

### [Effects of Invention]

As described above, an engine system of the present invention can enhance exhaust performance.

### [Brief Description of Drawings]

FIG. 1 is an outline configuration diagram illustrating a preferable embodiment of an engine system of the present invention.
FIG. 2 is a function block diagram illustrating a control system of an engine.
FIG. 3 is a flowchart illustrating procedures of control to be carried out by a controller.
FIG. 4 is a diagram for explaining procedures of calculation of an ammonia adsorption amount.
FIG. 5 is a graph illustrating a relationship between an SCR catalyst temperature and a target adsorption amount.
FIG. 6 is a graph illustrating a relationship among an engine speed, the SCR catalyst temperature, and normal upper limit torque.
FIG. 7 is a graph illustrating a relationship between an initial adsorption amount and a reduction amount of upper limit torque.
FIG. 8 is a graph illustrating the normal upper limit torque and low-temperature upper limit torque while comparing those.
FIG. 9 is a time chart schematically illustrating time changes in the SCR catalyst temperature, the ammonia adsorption amount, and the upper limit torque in an engine start.
FIG. 10 shows a relationship between an upper limit torque and a SCR catalyst temperature, and a relationship between the upper limit torque and an initial adsorption amount of ammonia.

### [Embodiment for Carrying Out the Invention]

### (General Configuration of Engine)

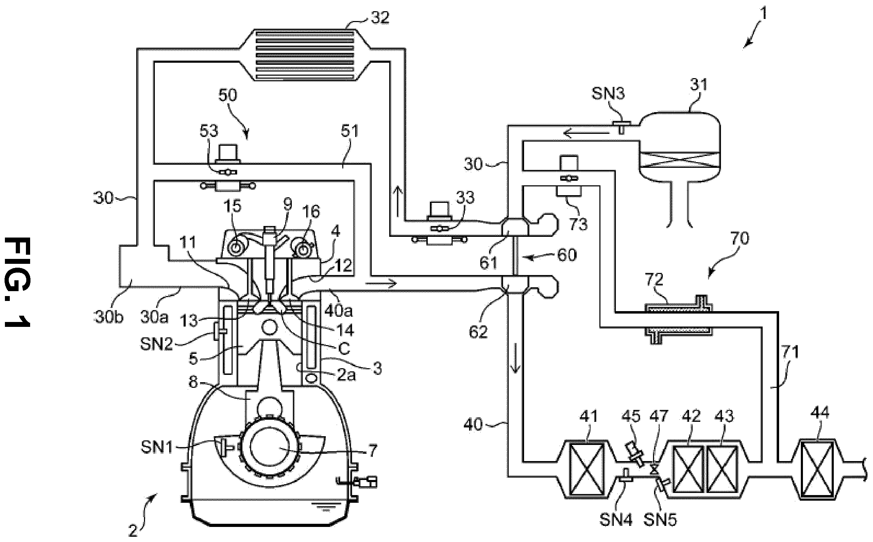

FIG. 1 is an outline configuration diagram illustrating a preferable embodiment of an engine system of the present invention. An engine included in an engine system 1 illustrated in FIG. 1 may be a four-cycle engine, e.g., a four-cycle diesel engine, which is installed in a vehicle as a motive power source for travel.

The engine includes an engine body 2, an intake passage 30 through which intake air introduced into the engine body 2 flows, and an exhaust passage 40 through which exhaust gas exhausted from the engine body 2 flows. The engine further includes at least one of an HP-EGR apparatus 50 and an LP-EGR apparatus 70 which return a part of the exhaust gas flowing through the exhaust passage 40 to the intake passage 30. The engine may further include an exhaust turbocharging apparatus 60 which supercharges the intake air flowing through the intake passage 30.

The engine body 2 has one or a plurality of cylinders 2a which are aligned in a direction orthogonal to the page of FIG. 1 (only one cylinder is illustrated in FIG. 1). The engine body 2 may include a cylinder block 3, a cylinder head 4, and one or a plurality of pistons 5. Each of the cylinders 2a is formed with the cylinder block 3 and the cylinder head 4. That is, a plurality of cylindrical spaces which correspond to the plurality of cylinders 2a are formed in an internal portion of the cylinder block 3, and the cylinder head 4 is mounted on an upper surface of the cylinder block 3 so as to block the cylindrical spaces from an upper area. The piston 5 is housed in each of the cylinders 2a to be capable of reciprocatively sliding.

A combustion chamber C is formed above the piston 5 of each of the cylinders 2a. Each of the combustion chambers C may be a space which is demarcated by a lower surface of the cylinder head 4, a side peripheral surface (cylinder liner) of the cylinder 2a, and a crown surface of the piston 5. The combustion chamber C receives supply of fuel injected from an injector 9 which will be described later. The piston 5 receives combustion energy of the fuel supplied to the combustion chamber C and thereby performs reciprocating motion in an up-down direction.

A crankshaft 7 as an output shaft of the engine body 2 may be provided below the piston 5 and in a lower portion of the cylinder block 3. The crankshaft 7 is coupled with the piston 5 of each of the cylinders 2a via a connecting rod 8 and rotates around a center axis in response to the reciprocating motion (up-down motion) of the piston 5.

A crank angle sensor SN1 and a water temperature sensor SN2 may be mounted on the cylinder block 3. The crank angle sensor SN1 detects a crank angle as a rotation angle of the crankshaft 7 and an engine speed as a rotational speed of the crankshaft 7. The water temperature sensor SN2 detects a temperature of cooling water which flows through internal portions of the cylinder block 3 and the cylinder head 4, in other words, an engine water temperature.

Fuel injectors 9 may be mounted on the cylinder head 4. The fuel injector 9 supplies fuel to the combustion chamber C of each of the cylinders 2a. The fuel injector 9 may be mounted on the cylinder head 4 such that a distal end portion of the fuel injector 9 is exposed in the combustion chamber C.

One or a plurality of injection holes as outlets of fuel are formed in the distal end portion of the fuel injector 9. The fuel injected from each of the injection holes may be combusted by self-ignition in the combustion chamber C which is at a high temperature and a high pressure due to a compression action of the piston 5.

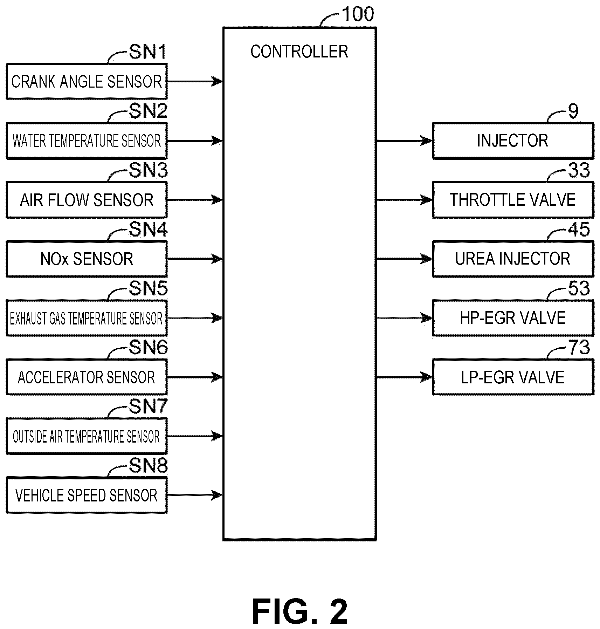

In the engine according to the present embodiment, engine torque is changed mainly in accordance with an amount of fuel to be injected from the fuel injectors 9. As noted above, in the present embodiment, the fuel injector 9 corresponds to an "adjustment apparatus" of the present invention. Note that in the following description and in FIG. 2 which will be described later, the fuel injector 9 will simply be denoted as an injector 9.

Particularly, in the cylinder head 4, intake ports 11 and exhaust ports 12 are formed. The intake port 11 is a port which connects the combustion chamber C of each of the cylinders 2a with the intake passage 30. The exhaust port 12 is a port which connects the combustion chamber C of each of the cylinders 2a with the exhaust passage 40. An intake valve 13 may be provided in the intake port 11 of each of the cylinders 2a, and an exhaust valve 14 may be provided in the exhaust port 12 of each of the cylinders 2a.

For example, the cylinder head 4 is equipped with an intake valve operating mechanism 15 and an exhaust valve operating mechanism 16. The intake valve operating mechanism 15 drives the intake valve 13 of each of the cylinders 2a to open and close in conjunction with rotations of the crankshaft 7. The exhaust valve operating mechanism 16 drives the exhaust valve 14 of each of the cylinders 2a to open and close in conjunction with rotations of the crankshaft 7.

The intake valve 13 periodically opens and/or closes an opening of the intake port 11 on the combustion chamber C side in response to driving of the intake valve operating mechanism 15. The exhaust valve 14 periodically opens and/or closes an opening of the exhaust port 12 on the combustion chamber C side in response to driving of the exhaust valve operating mechanism 16.

The intake passage 30 is a passage for introducing intake air into the combustion chamber C of each of the cylinders 2a. The intake passage 30 may have a surge tank 34 in a portion, on a downstream side, which is close to the engine body 2. The surge tank 34 is a tank which provides an expansion space for equalizing an introduction amount of intake air into each of the cylinders 2a.

In a portion in the intake passage 30 on an upstream side relative to the surge tank 34, an air cleaner 31, a throttle valve 33, and/or an intercooler 32 may be sequentially provided. The air cleaner 31 is a filter for removing foreign substances in the intake air. The intercooler 32 is a heat exchanger which cools the intake air compressed by the exhaust turbocharging apparatus 60. The throttle valve 33 is a valve for adjusting a flow amount of the intake air.

An air flow sensor SN3 may be mounted on the intake passage 30. The air flow sensor SN3 is a sensor which detects the flow amount of the intake air, which is introduced into the engine body 2, and is arranged in a portion in the intake passage 30 on the downstream side relative to the air cleaner 31.

The exhaust passage 40 is a passage for discharging the exhaust gas exhausted from the combustion chamber C of each of the cylinders 2a to an outside. The exhaust passage 40 is provided with one or a plurality of catalysts 41 to 44 for purifying various harmful components contained in the exhaust gas.

For example, an oxidation catalyst apparatus 41, an SCRF (Selective Catalytic Reduction Filter) 42, an SCR (Selective Catalytic Reduction) catalyst apparatus 43, and a slip catalyst apparatus 44 are provided in this order from the upstream side (the side close to the engine body 2) of the exhaust passage 40. Further, a urea injector 45 and/or a mixing plate 47 may be provided in a portion between the oxidation catalyst apparatus 41 and the SCRF 42 in the exhaust passage 40.

The oxidation catalyst apparatus 41 has a catalyst for oxidizing and detoxifying CO and HC in the exhaust gas (for converting those into CO₂ and H₂O). The oxidation catalyst apparatus 41 has a porous carrier and a catalyst substance such as platinum or palladium, which is carried by the carrier, for example.

The urea injector 45 is an injection valve which injects urea water made by dissolving high-purity urea into pure water. The urea injector 45 injects the urea water, which is supplied from a urea water tank (not illustrated) installed in the vehicle, into an internal portion of the exhaust passage 40. Urea contained in the injected urea water is converted into ammonia (NH₃) by hydrolysis at a high temperature and is adsorbed on one or more SCR catalysts included in the SCRF 42 and the SCR catalyst apparatus 43 on the downstream side.

The mixing plate 47 is a plate-shaped member for stirring a flow of the exhaust gas. The mixing plate 47 serves to uniformly disperse urea contained in the urea water injected from the urea injector 45 and to send that to the downstream side (the SCRF 42 and the SCR catalyst apparatus 43).

The SCRF 42 is a filter with an SCR catalyst. The SCRF 42 is an apparatus in which a catalyst substance such as platinum for combusting soot and the SCR catalyst are carried by a filter capable of collecting the soot in the exhaust gas.

As described above, the SCRF 42 adsorbs ammonia which is generated from the urea water injected by the urea injector 45. The SCR catalyst included in the SCRF 42 is a selective reduction type NOx catalyst and reduces and detoxifies NOx in the exhaust gas (converts that into N₂ and H₂O) by a chemical reaction using ammonia as a reducing agent. As the SCR catalyst, for example, vanadium, tungsten, zeolite or the like is used.

For example, the SCR catalyst apparatus 43 is an apparatus including the SCR catalyst and has a porous carrier and the SCR catalyst such as vanadium, tungsten, or zeolite which is carried by the carrier, for example. The SCR catalyst apparatus 43 reduces NOx which is not reduced by the SCRF 42. A casing may be shared by the SCRF 42 and the SCR catalyst apparatus 43, and the SCR catalyst apparatus 43 is provided on an immediate downstream position of the SCRF 42. The SCR catalyst included in the above SCRF 42 and/or SCR catalyst apparatus 43 correspond to the "selective reduction catalyst".

The slip catalyst apparatus 44 is an apparatus which has an oxidation catalyst for oxidizing ammonia slipping from the SCRF 42 and the SCR catalyst apparatus 43 (in other words, the ammonia flowing out to the downstream side without being used for reduction of NOx). As the slip catalyst apparatus 44, for example, an apparatus having a similar structure to the oxidation catalyst apparatus 41 can be used.

In a portion between the oxidation catalyst apparatus 41 and the urea injector 45 in the exhaust passage 40, a NOx sensor SN4 may be provided which detects a concentration of NOx in the exhaust gas. Further, in an immediate upstream portion of the SCRF 42 (a portion between the mixing plate 47 and the SCRF 42), an exhaust gas temperature sensor SN5 may be provided which detects a temperature of the exhaust gas. The NOx sensor SN4 corresponds to a "NOx concentration detection apparatus".

The exhaust turbocharging apparatus 60 is a supercharging apparatus which uses the exhaust gas exhausted from the combustion chamber C and thereby supercharges air to be supplied to the above combustion chamber C. For example, the exhaust turbocharging apparatus 60 includes a compressor 61 which is arranged in the intake passage 30 and a turbine 62 which is coaxially coupled with the compressor 61 and is arranged in the exhaust passage 40. The compressor 61 is arranged in a portion between the air cleaner 31 and the intercooler 32 in the intake passage 30. The turbine 62 is arranged in a portion in the exhaust passage 40 on the upstream side relative to the oxidation catalyst apparatus 41.

The exhaust gas exhausted from the engine body 2 is introduced into the turbine 62, and the turbine 62 is rotated and driven by the exhaust gas. The compressor 61 rotates in conjunction with the turbine 62 and pressure-feeds the intake air to the downstream side. In other words, supercharging for sending the intake air in the intake passage 30 to the engine body 2 while compressing the intake air is realized by the exhaust turbocharging apparatus 60.

The HP-EGR (High Pressure-EGR) apparatus 50 includes an HP-EGR passage 51 and an HP-EGR valve 53. The HP-EGR passage 51 is a passage for returning the exhaust gas from the exhaust passage 40 to the intake passage 30. For example, the HP-EGR passage 51 connects a portion in the exhaust passage 40 on the upstream side relative to the turbine 62 with a portion between the throttle valve 33 and the compressor 61 in the intake passage 30. The HP-EGR valve 53 is a valve which adjusts a return amount of HP-EGR gas as the exhaust gas which is returned to the intake passage 30 through the HP-EGR passage 51.

The LP-EGR (Low Pressure-EGR) apparatus 70 may include an LP-EGR passage 71, an EGR cooler 72, and an LP-EGR valve 73. The LP-EGR passage 71 is a passage for returning the exhaust gas, which passes through the SCR catalyst apparatus 43, to the intake passage 30. For example, the LP-EGR passage 71 connects a portion between the SCR catalyst apparatus 43 and the slip catalyst apparatus 44 in the exhaust passage 40 with a portion in the intake passage 30 on the upstream side relative to the compressor 61. The EGR cooler 72 cools LP-EGR gas as the exhaust gas which is returned to the intake passage 30 through the LP-EGR passage 71. The LP-EGR valve 73 is a valve which adjusts a return amount of LP-EGR gas.

In the following, the exhaust gas which is returned to the intake passage 30 by the HP-EGR apparatus 50 and the LP-EGR apparatus 70 will be referred to as EGR gas. In other words, the HP-EGR gas and the LP-EGR gas will collectively be referred to as EGR gas.

Further, returning the exhaust gas by using the LP-EGR apparatus 70 will appropriately be referred to as LP-EGR, and returning the exhaust gas by using the HP-EGR apparatus 50 will appropriately be referred to as HP-EGR.

### (Control System)

FIG. 2 is a function block diagram illustrating a control system of the engine of the present embodiment. The engine system 1 has a controller 100. The controller 100 may be an apparatus for integrally controlling the engine and is configured with a computer (e.g., a microcomputer) including known CPU (processor), ROM, RAM, and so forth. The controller 100 corresponds to a "control apparatus" of the present invention.

For example, the controller 100 is configured to execute a program for controlling the engine. The program to be executed by the controller 100 may be transferred or delivered by a computer program product which stores the program.

Detection information by one or various sensors is input to the controller 100. For example, the controller 100 is electrically connected with the above-described crank angle sensor SN1, water temperature sensor SN2, air flow sensor SN3, NOx sensor SN4, and/or exhaust gas temperature sensor SN5, and various information detected by those sensors, for example, information such as the crank angle, the engine speed, the engine water temperature, an intake air flow amount, and the temperature of the exhaust gas is each and successively input to the controller 100.

Further, the vehicle may be provided with an accelerator sensor SN6 which detects an opening (hereinafter referred to as an accelerator opening) of an accelerator pedal which is operated by a driver driving the vehicle, an outside air temperature sensor SN7 which detects an outside air temperature, and/or a vehicle speed sensor SN8 which detects a vehicle speed. Detection information by those accelerator sensor SN6, outside air temperature sensor SN7, and/or vehicle speed sensor SN8 may be successively input to the controller 100.

The controller 100 controls each unit of the engine while executing various kinds of determinations, computation, and so forth based on input information from each of the above sensors (SN1 to SN8). For example, the controller 100 is electrically connected with the fuel injectors 9, the throttle valve 33, the urea injector 45, the HP-EGR valve 53, the LP-EGR valve 73, and so forth and respectively outputs signals for control to those devices based on results or the like of the above computation.

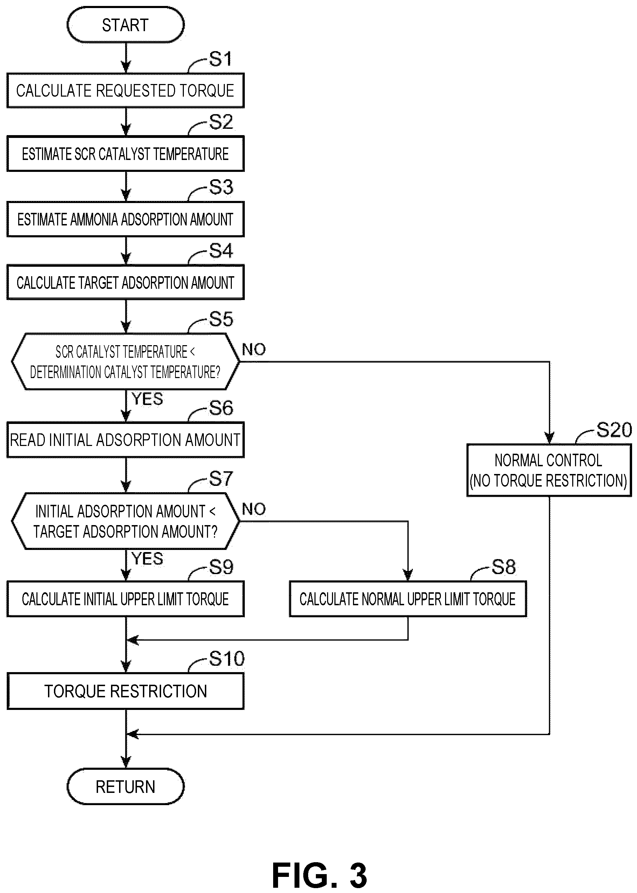

A description will be made, by using a flowchart in FIG. 3, about characteristic control of the present invention, which is control about the engine torque to be carried out by the controller 100. Note that the flowchart illustrated in FIG. 3 may be repeatedly carried out every predetermined computation cycle while the engine is driven.

First, the controller 100 may calculate an engine load, in other words, requested torque as engine torque which is requested by the driver of the vehicle (step S1). The controller 100 may calculate the requested torque based on the vehicle speed detected by the vehicle speed sensor SN8, the accelerator opening detected by the accelerator sensor SN6, and so forth.

The requested torque is set to have a value equal to or lower than a maximum value of the engine torque that is a maximum value of torque realizable by the engine body. Note that the maximum value of the engine torque may be set in advance based on a maximum combustion pressure, an air amount, and so forth.

Next, the controller 100 may estimate or calculate an SCR catalyst temperature as a temperature of the SCRF 42 (step S2). The SCR catalyst temperature may correspond to a "selective reduction catalyst temperature ("temperature of the catalyst or selective reduction catalyst)".

In step S2, the controller 100 may estimate or calculate an input heat quantity to the SCRF 42 and a dissipated heat quantity from the SCRF 42 and estimate or calculate the SCR catalyst temperature based on those. For example, the controller 100 estimates or calculates a flow amount of the exhaust gas based on the intake air flow amount, which is detected by the air flow sensor SN3, or the like and calculates the input heat quantity to the SCRF 42 based on the flow amount of the exhaust gas and the temperature of the exhaust gas at immediate front of the SCRF 42, which is detected by the exhaust gas temperature sensor SN5.

Further, the controller 100 may calculate the dissipated heat quantity from the SCRF 42 based on the vehicle speed detected by the vehicle speed sensor SN8 and the outside air temperature detected by the outside air temperature sensor SN7. The controller 100 may calculate the SCR catalyst temperature based on the calculated input heat quantity and dissipated heat quantity of the SCRF 42 and a heat capacity of the SCRF 42 which is stored in advance.

For example, the SCR catalyst temperature is calculated to be a higher value as the input heat quantity becomes larger or the dissipated heat quantity becomes smaller and is calculated to be a lower value as the input heat quantity becomes smaller or the dissipated heat quantity becomes larger. Here, the dissipated heat quantity from the SCRF 42 can be dealt with as a larger quantity as the vehicle speed becomes higher. This is because as the vehicle speed becomes higher, traveling air blowing against the SCRF 42 increases and heat dissipation is promoted more. Conversely, because the dissipated heat quantity becomes smaller as the vehicle speed becomes lower, it is estimated that the SCR catalyst temperature becomes higher as the vehicle speed becomes lower.

Next, the controller 100 estimates or calculates an ammonia adsorption amount as an amount of ammonia which is adsorbed on the SCR catalyst, particularly the SCR catalysts included in the SCRF 42 and the SCR catalyst apparatus 43. In the following, the SCR catalysts included in the SCRF 42 and the SCR catalyst apparatus 43 will collectively be referred to as the SCR catalyst.

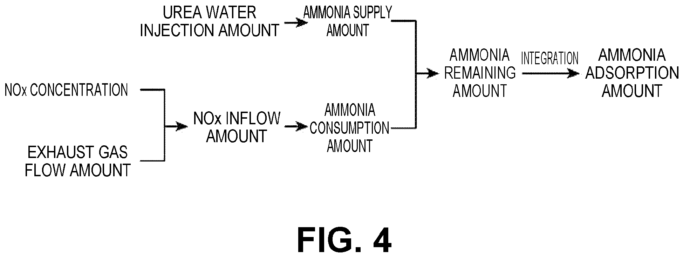

The controller 100 may estimate or calculate the amount of ammonia remaining in the SCR catalyst at each time point from the difference between an ammonia amount flowing into the SCR catalyst and the ammonia amount consumed for reduction of NOx in the SCR catalyst and calculate a value, which results from integration of the amounts of remaining ammonia, as the ammonia adsorption amount. FIG. 4 is a diagram for explaining procedures of estimation of the ammonia adsorption amount.

For example, based on a urea water injection amount as an amount of the urea water injected from the urea injector 45, the controller 100 estimates or calculates an ammonia supply amount as the amount of ammonia which is supplied to the SCR catalyst at each time point. For example, the controller 100 may calculate the ammonia supply amount to be larger as the amount of ammonia which is supplied to the SCR catalyst becomes larger.

Further, based on a NOx concentration in the exhaust gas which is detected by the NOx sensor SN4 and, optionally, the flow amount of the exhaust gas, the controller 100 estimates or calculates a NOx inflow amount as an amount of NOx which flows into the SCR catalyst at each time point. The controller 100 may estimate or calculate the NOx inflow amount to be larger as the NOx concentration becomes larger and/or as the flow amount of the exhaust gas becomes larger.

Note that the flow amount of the exhaust gas may be calculated from a detection value of the air flow sensor SN3, openings of the HP-EGR valve 53 and the LP-EGR valve 73, and so forth. For example, the flow amount of the exhaust gas may be calculated to be larger as the detection value of the air flow sensor SN3 becomes larger, as opening of the HP-EGR valve 53 becomes larger, and/or as the opening of the LP-EGR valve 73 becomes larger.

Further, based on the estimated NOx inflow amount, the controller 100 may calculate an ammonia consumption amount as the amount of ammonia which is consumed for reducing the NOx at each time point. For example, the controller 100 may calculate the ammonia consumption to be larger as the estimated NOx inflow amount becomes larger. Then, the controller 100 subtracts the ammonia consumption amount from the ammonia supply amount, thereby calculates an ammonia remaining amount at each time point, and calculates a value which is obtained by integration of the ammonia remaining amounts as the ammonia adsorption amount.

Returning to the flowchart in FIG. 3, after the ammonia adsorption amount is estimated as described above, the controller 100 may calculate a target adsorption amount as a target value of the amount of ammonia which is adsorbed by the SCR catalyst (step S4).

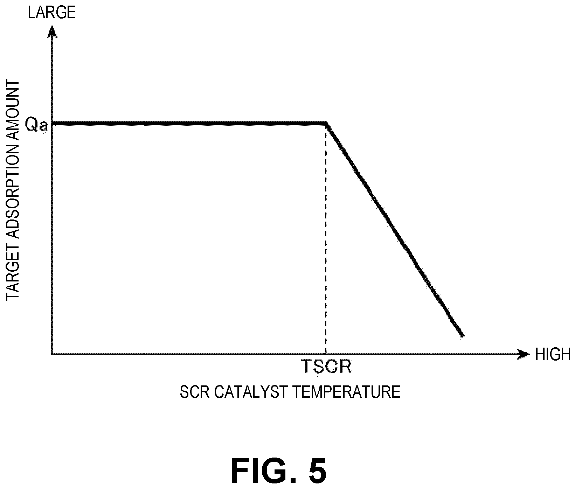

FIG. 5 is a graph illustrating a relationship between the SCR catalyst temperature and the target adsorption amount. The SCR catalyst may have properties that the SCR catalyst is less likely to adsorb ammonia as the temperature of the SCR catalyst becomes higher. Accordingly, as illustrated in FIG. 5, the target adsorption amount is set to have a smaller value as the SCR catalyst temperature becomes higher.

For example, the target adsorption amount is set to have a lower value when the SCR catalyst temperature is equal to or higher than a predetermined reference catalyst temperature TSCR than a value which is set when the SCR catalyst temperature is lower than the reference catalyst temperature TSCR. Further, the target adsorption amount may be set to have a fixed value Qa regardless of the SCR catalyst temperature when the SCR catalyst temperature is lower than the reference catalyst temperature TSCR. The target adsorption amount may be set to have a lower value as the SCR catalyst temperature becomes higher when the SCR catalyst temperature is equal to or higher than the reference catalyst temperature TSCR.

Returning to the flowchart in FIG. 3, after the target adsorption amount is set, the controller 100 may determine whether or not the SCR catalyst temperature estimated in step S2 is lower than a determination catalyst temperature (step S5). The determination catalyst temperature may be the temperature of the SCR catalyst in a case where a NOx purification rate by the SCR catalyst has a predetermined value or higher in a state where sufficient ammonia is adsorbed on the SCR catalyst. The determination catalyst temperature may be set in advance and stored in the controller 100.

Here, when a sufficient time has elapsed after the engine is started, the SCR catalyst is warmed by the exhaust gas, and its temperature is equal to or higher than the determination temperature. Accordingly, it can be considered that a case where the determination in step S5 is YES is a case where a sufficient time has not elapsed after the engine is started.

When the determination in step S5 is NO and the SCR catalyst temperature is equal to or higher than the determination catalyst temperature, the controller 100 may carry out normal control (step S20) and finish a process (returns to step S1). For example, the controller 100 decides or determines a fuel injection amount as an amount of fuel to be injected from the injectors 9 based on the requested torque, which is calculated in step S2, and the intake air flow amount, which is detected by the air flow sensor SN3, and controls the injectors 9 in accordance with the decision.

As described later, in a case where the determination in step S3 is YES, torque restriction is carried out in which the fuel injection amount is controlled such that the engine torque does not exceed an upper limit torque which has a lower value than the maximum value of the engine torque. On the other hand, when the normal control is carried out, the torque restriction is not performed, the requested torque is realized, and the fuel injection amount is controlled such that the engine torque does not exceed its maximum value. Note that when the normal control is carried out, the controller 100 decides or determines an injection amount of the urea water with which the target adsorption amount set in step S4 is realizable and controls the urea injector 45 in accordance with the decision.

On the other hand, when the determination in step S5 is YES and the SCR catalyst temperature is lower than the determination catalyst temperature, the controller 100 reads an initial adsorption amount (step S6). The initial adsorption amount is the ammonia adsorption amount at the engine start, in other words, the amount of ammonia which is adsorbed on the SCR catalyst when the engine is started.

In a period from a stop to a start of the engine, the ammonia adsorption amount hardly changes. Accordingly, the controller 100 sets the ammonia adsorption amount, which is estimated at an immediately previous engine stop, as the initial adsorption amount. In other words, the controller 100 may store the ammonia adsorption amount which is estimated when the engine is stopped and read the ammonia adsorption amount, which is stored at the engine stop, as the initial adsorption amount when the engine is next started.

Next, the controller 100 may determine whether or not the initial adsorption amount which is read in step S6 is smaller than the target adsorption amount which is set in step S4 (step S7).

As described above, a case where the determination in step S5 is YES is a case where a sufficient time has not elapsed after the engine is started. Accordingly, the target adsorption amount used in step S7 to which the process moves after the determination in step S5 is YES is equivalent to the target adsorption amount at the engine start.

Further, the SCR catalyst temperature at the engine start is mostly lower than the above reference catalyst temperature TSCR, and the target adsorption amount at the engine start has the fixed value Qa (FIG. 5) regardless of a state at the engine stop or during the stop. Accordingly, the determination in step S7 is almost the same as a determination about whether or not the initial adsorption amount has a lower value than the predetermined value Qa.

In a case where the determination in step S7 is NO and it is determined that the initial adsorption amount is equal to or greater than the target adsorption amount, the controller 100 may calculate a normal upper limit torque (step S8).

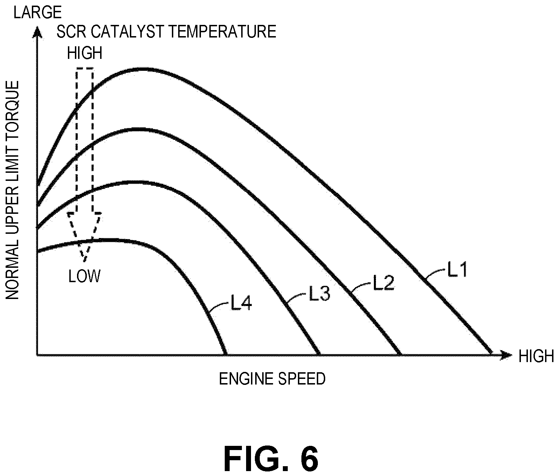

For example, based on the engine speed and/or the SCR catalyst temperature, the controller 100 may set the normal upper limit torque to a value which is lower than the maximum value of the engine torque. FIG. 6 is a graph schematically illustrating a relationship among the engine speed, the SCR catalyst temperature, and the normal upper limit torque. Each of lines L1 to L4 in the graph in FIG. 6 is a line which represents a relationship between the engine speed and the normal upper limit torque for each of the SCR catalyst temperatures.

The SCR catalyst temperatures which correspond to four lines L1, L2, L3, and L4 are higher in this order, and the normal upper limit torque may be set to have a higher value as the SCR catalyst temperature becomes higher.

Further, as it can be understood from each of the lines L1 to L4, under a condition where the SCR catalyst temperature is fixed, the normal upper limit torque is set to have a higher value as the engine speed becomes higher when the engine speed is lower than a predetermined revolution speed and is set to have a lower value as the engine speed becomes higher when the engine speed is equal to or higher than the above predetermined revolution speed.

In the controller 100, the relationship among the engine speed, the SCR catalyst temperature, and the normal upper limit torque may be stored as a map. The controller 100 may extract, from the map, a value which corresponds to the engine speed detected by the crank angle sensor SN1 and to the SCR catalyst temperature estimated in step S2 and sets the extracted value as the normal upper limit torque. Note that as described above, the normal upper limit torque stored in the map is set to have a value lower than the maximum value of the engine torque.

On the other hand, in a case where the determination in step S7 is YES and it is determined that the initial adsorption amount is smaller than the target adsorption amount, the controller 100 may calculate initial upper limit torque (step S9).

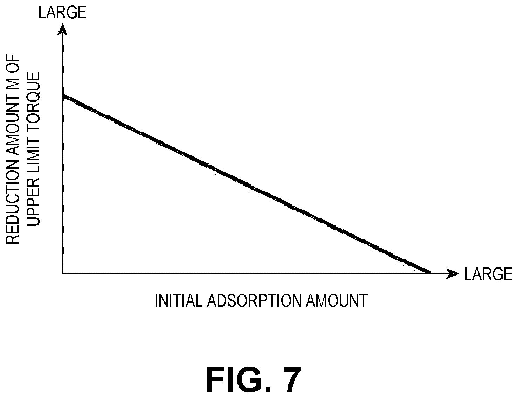

For example, similarly to a case where step S8 is carried out, the controller 100 first calculates the normal upper limit torque based on the engine speed and the SCR catalyst temperature. Next, the controller 100 sets a reduction amount M of the upper limit torque. In the present embodiment, as illustrated in FIG. 7, as the initial adsorption amount read in step S6 becomes larger, the reduction amount M is set to have a lower value. Next, the controller 100 sets a value, which is lower than that of the normal upper limit torque by the reduction amount M, to the initial upper limit torque.

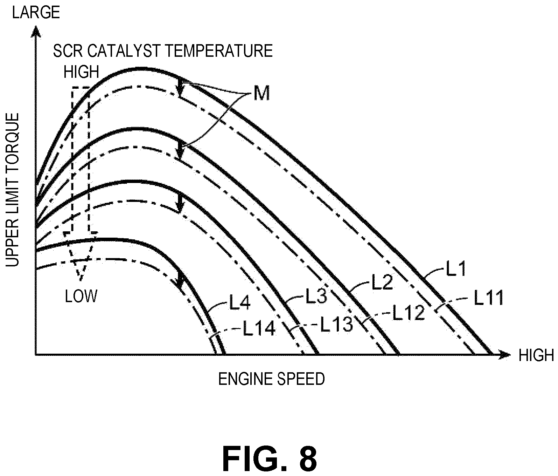

FIG. 8 is a graph for comparing the normal upper limit torque with the initial upper limit torque. In FIG. 8, solid lines indicate the normal upper limit torque, and dot-dash lines indicate the initial upper limit torque. Dot-dash lines L11 to L14 in FIG. 8 indicate pieces of the initial upper limit torque which respectively correspond to lines L1 to L4 of the normal upper limit torque. As it can be understood from those dot-dash lines L11 to L14, similarly to the normal upper limit torque, the initial upper limit torque changes in accordance with the SCR catalyst temperature and the engine speed and is set to have a lower value as the SCR catalyst temperature becomes lower.

Further, as described above, the reduction amount M is set to have a lower value as the initial adsorption amount becomes larger. Accordingly, the initial upper limit torque is set so as to become smaller as the SCR catalyst temperature becomes lower and to become smaller as the initial adsorption amount becomes smaller.

After step S8 or step S9 is carried out, the controller 100 carries out the torque restriction (step S10). For example, the controller 100 sets the upper limit torque as an upper limit value of the engine torque and compares the upper limit torque with the requested torque which is calculated in step S1.

Then, in a case where the requested torque is equal to or smaller than the upper limit torque, the controller 100 decides or determines the fuel injection amount as the amount of fuel to be injected from the injectors 9 such that the requested torque is realized and controls the injectors 9 in accordance with the decision. On the other hand, in a case where the requested torque is larger than the upper limit torque, the controller 100 decides or determines the fuel injection amount as the amount of fuel to be injected from the injectors 9 such that not the requested torque but the upper limit torque which is lower than that is realized and controls the injectors 9 in accordance with the decision.

In step S10 after the process moves to step S8, the controller 100 sets the normal upper limit torque, which is set in step S8, as the upper limit torque. On the other hand, in step S10 after the process moves to step S9, the controller 100 sets the initial upper limit torque, which is set in step S9, as the upper limit torque.

As described above, the initial upper limit torque is set to have a value lower than that of the normal upper limit torque. Accordingly, the upper limit torque is set to have a lower value when the process moves step S9, in other words, the initial adsorption amount is smaller than the target adsorption amount than when the process moves to step S8, in other words, the initial adsorption amount is equal to or greater than the target adsorption amount, and restriction of the engine torque is made stronger. In other words, the upper limit torque is set to have a first value when the process moves step S9, in other words, the initial adsorption amount is smaller than the target adsorption amount. The first value is smaller than a second value. The upper limit torque is set to have the second value when the process moves to step S8, in other words, the initial adsorption amount is equal to or greater than the target adsorption amount.

Further, the initial upper limit torque is set to have a lower value as the initial adsorption amount becomes smaller. Accordingly, in step S10 after the process moves to step S9, restriction of the engine torque is made stronger as the initial adsorption amount becomes smaller.

After the torque restriction is carried out in step S10, the controller 100 may finish the process (returns to step S1).

Note that when the torque restriction is carried out, basically similarly to a case where the normal control is carried out, the controller 100 may decide or determine the injection amount of the urea water with which the target adsorption amount set in step S4 is realizable and control the urea injector 45 in accordance with the decision. However, when the SCR catalyst temperature is lower than a urea injection prohibition temperature which is set to have a value much lower than the determination catalyst temperature, because reduction of NOx in the SCR catalyst is hardly performed, the controller 100 prohibits injection of the urea water from the urea injector 45.

The above torque control which includes above steps S8, S9, and S10 and in which the upper limit torque is set and the engine torque is restricted to the upper limit torque or lower, the upper limit torque having a lower value than the maximum value of the engine torque, may correspond to "restriction control" of the present invention.

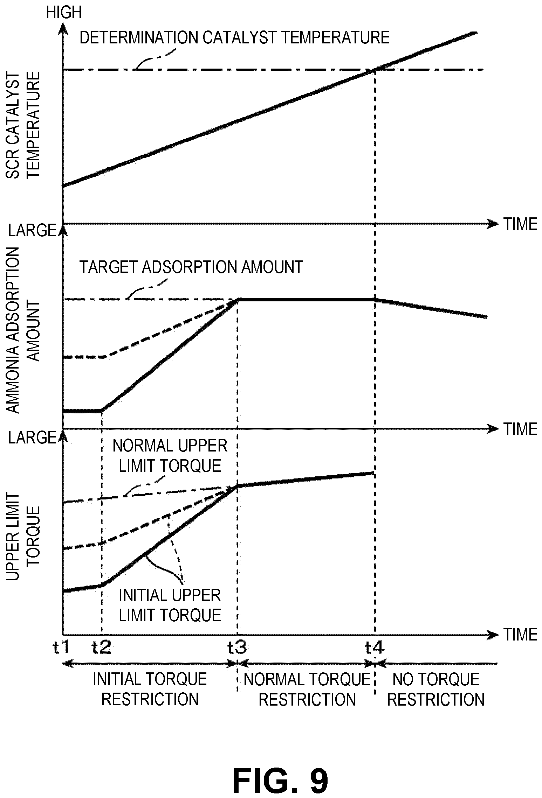

FIG. 9 is a time chart schematically illustrating time changes in the SCR catalyst temperature, the ammonia adsorption amount, and the upper limit torque after the engine start. Solid lines and broken lines in graphs of the upper limit torque and the ammonia adsorption amount in FIG. 9 are lines of patterns with different initial adsorption amounts, and the initial adsorption amount is smaller in a first pattern indicated by the solid lines than a second pattern indicated by dot-dash lines. Note that in FIG. 9, it is presumed that the SCR catalyst temperature similarly rises in both of the patterns. Further, as described above, because the target adsorption amount at the engine start is set to have the substantially fixed value Qa, FIG. 9 illustrates, as an example, a case where the target adsorption amount is the same in both of the patterns.

In the example in FIG. 9, the engine is started at time t1. The SCR catalyst temperature at the time t1 is lower than the determination catalyst temperature. Further, in each of the first pattern and the second pattern, the ammonia adsorption amount at the time t1, in other words, the initial adsorption amount is smaller than the target adsorption amount. Accordingly, in both of the patterns, the torque restriction is carried out, the upper limit torque is set to the initial upper limit torque which is lower than the normal upper limit torque indicated by the dot-dash line.

However, the initial adsorption amount is smaller in the first pattern than the second pattern. Accordingly, the upper limit torque (initial upper limit torque) is set to have a lower value in the first pattern than the second pattern.

In the example in FIG. 9, the SCR catalyst temperature reaches the above urea injection prohibition temperature at time t2. Accordingly, until the time t2, injection of the urea water is prohibited, reduction of NOx in the SCR catalyst is stopped, and in a period until the time t2, the ammonia adsorption amount is maintained at an almost fixed amount.

Meanwhile, the engine is started, and the SCR catalyst temperature thereby gradually rises. In accordance with that, in both of the first pattern and the second pattern, the initial upper limit torque is gradually increased.

When the SCR catalyst temperature reaches the above urea injection prohibition temperature at the time t2, injection of the urea water is started. Accordingly, the ammonia adsorption amount gradually increases from the time t2, and after the time t2, the difference between the ammonia adsorption amount and the target adsorption amount decreases.

Further, the SCR catalyst temperature keeps rising after the time t2. Accordingly, after the time t2, the initial upper limit torque increases at a higher speed than that in a period before the time t2.

In the example in FIG. 9, in both patterns of the first pattern and the second pattern, ammonia adsorption uses reach the target adsorption amount at time t3. Meanwhile, in the example in FIG. 9, the SCR catalyst temperature does not reach the determination catalyst temperature at the time t3. Accordingly, in this example, in both of the patterns, at the time t3, the upper limit torque is switched to the normal upper limit torque which is higher than the initial upper limit torque, and the torque restriction is carried out in which the normal upper limit torque is set as the upper limit torque.

In the example in FIG. 9, the SCR catalyst temperature reaches the determination catalyst temperature at time t4 after the time t3. Accordingly, after the time t4, the torque restriction is stopped.

Note that after the time t4, the target adsorption amount and an actual adsorption amount lower in accordance with the rise of the SCR catalyst temperature. Further particularly, the upper limit torque may be changed or increased linearly.

As described in the foregoing, in the engine system 1 according to the present embodiment, in a case where the SCR catalyst temperature is lower than the determination catalyst temperature, the torque restriction is carried out, and the injectors 9 are controlled such that the engine torque is equal to or lower than the upper limit torque (the normal upper limit torque or the initial upper limit torque), the upper limit torque having a lower value than the maximum value of the engine torque.

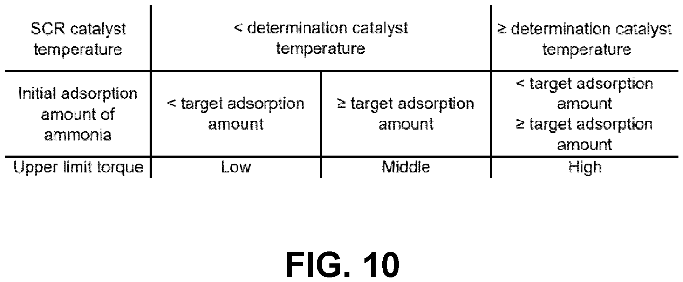

For example, as shown in FIG. 10, the upper limit torque becomes lower as the SCR catalyst temperature becomes lower. Thus, when a purification capability of the SCR catalyst is low because the SCR catalyst temperature is lower than the determination catalyst temperature, a large amount of combustion gas and thus the exhaust gas can be prevented from being generated. In other words, a situation can be avoided where NOx which cannot completely be purified by the SCR catalyst is discharged from the engine body 2. Consequently, proper exhaust performance can be achieved.

Particularly, the upper limit torque (initial upper limit torque) in a case where the initial adsorption amount is smaller than the target adsorption amount and the initial adsorption amount is smaller may be set to have a lower value than the upper limit torque (normal upper limit torque) in a case where the initial adsorption amount is equal to or greater than the target adsorption amount and the initial adsorption amount is comparatively larger.

Further particularly, as shown in FIG. 10, the upper limit torque becomes lower as the initial adsorption amount becomes lower. Thus, when a sufficient amount of ammonia is not adsorbed on the SCR catalyst and sufficient NOx reduction is difficult, the amount of NOx which is generated in the engine body can certainly be suppressed to a small amount, and proper exhaust performance can be achieved. Further, when sufficient ammonia is adsorbed on the SCR catalyst, while NOx is reduced by using the ammonia, the engine torque can be made comparatively high. Consequently, while proper exhaust performance is achieved, proper operation performance can be achieved.

Further particularly, the initial upper limit torque is set to have a lower value as the initial adsorption amount becomes smaller. In other words, even under the common condition where the initial adsorption amount is smaller than the target adsorption amount, the upper limit torque is set to have a lower value as the initial adsorption amount becomes smaller. Thus, in a case where the initial adsorption amount is smaller than the target adsorption amount, while the amount of NOx which is discharged to the outside of the engine is certainly suppressed to a small amount, an engine output or the engine torque can be prevented from excessively lowering.

Further particularly, both of the normal upper limit torque and the initial upper limit torque are set to have lower values as the SCR catalyst temperature becomes lower. Thus, those pieces of torque can be set to have appropriate values which correspond to the purification capability of the SCR catalyst, and while proper exhaust performance is achieved, the engine output or the engine torque can be prevented from becoming excessively small.

Further particularly, the amount of ammonia which is adsorbed on the SCR catalyst can be calculated by integrating the difference between the amount of ammonia which is supplied to the SCR catalyst and the amount of ammonia which is consumed in the SCR catalyst for reducing NOx.

In association with this, in the present embodiment, the initial adsorption amount is estimated based on the amount of urea injected by the urea injector, which is a value having a high correlation with the amount of ammonia supplied to the SCR catalyst, and on the NOx concentration detected by the NOx sensor SN4, which is a value having a high correlation with the amount of ammonia consumed in the SCR catalyst. Thus, the initial adsorption amount can precisely be estimated.

### (Modifications)

In the above embodiment, a description is made about a case where the engine torque is changed by changing the amount of fuel to be injected from the injectors 9, but an apparatus for changing the engine torque is not limited to the injector 9. For example, the air intake quantity is changed by changing the opening of the throttle valve 33, and the engine torque may thereby be changed. However, the engine according to the present embodiment is a diesel engine, and the engine torque is changed mainly in accordance with the fuel injection amount.

In the above embodiment, a description is made about a case where the upper limit value is set for the engine torque and the injectors 9 are controlled such that the engine torque has a value equal to or lower than the upper limit value, but an upper limit value is set for an engine output instead of the engine torque, and the injectors 9 and so forth may thereby be controlled such that the engine output has a value equal to or lower than the upper limit value.

Further, one of the SCRF 42 and the SCR catalyst apparatus 43 may be omitted.

### [Reference Signs List]

- 2: engine body
- 9: fuel injector (adjustment apparatus)
- 30: intake passage
- 40: exhaust passage
- 42: SCRF (selective reduction catalyst)
- 43: SCR catalyst apparatus (selective reduction catalyst)
- 45: urea injector
- 100: controller (control apparatus)
- SN4: NOx sensor (NOx concentration detection apparatus)

## Claims

1. An engine system (1) comprising:
an adjustment apparatus (9) which is configured to adjust an engine output or engine torque;
a catalyst (42, 43) which is configured to adsorb ammonia and reduces NOx in exhaust gas by using the ammonia; and
a control apparatus (100) which is configured to control the adjustment apparatus (9), wherein
the control apparatus (100) is configured to
carry out restriction control for controlling the adjustment apparatus (9) in a case where a temperature of the catalyst (42, 43) is lower than a predetermined determination catalyst temperature, such that an upper limit value of the engine output or the engine torque is set to a lower value than a maximum value and the engine output or the engine torque is equal to or lower than the upper limit value, and
in carrying out the restriction control, set the upper limit value to a lower value as an initial adsorption amount, which is an amount of ammonia adsorbed on the catalyst (42, 43) at an engine start, becomes smaller.

2. The engine system (1) according to claim 1, wherein
the control apparatus (100) is configured to set a target adsorption amount as a target value of the amount of ammonia to be adsorbed on the catalyst (42, 43), and
when the restriction control is carried out and the initial adsorption amount is smaller than the target adsorption amount, the control apparatus (100) is configured to set the upper limit value to a value lower than a value which is set when the initial adsorption amount is equal to or greater than the target adsorption amount, and make the upper limit value lower as the initial adsorption amount becomes smaller.

3. The engine system (1) according to claim 1 or 2, wherein
the control apparatus (100) is configured to set the upper limit value such that the upper limit value becomes lower as the temperature of the catalyst (42, 43) becomes lower.

4. The engine system (1) according to any one of the preceding claims, further comprising:
a urea injector (45) which is configured to inject urea into an exhaust passage (40) on an upstream side relative to the catalyst (42, 43); and
a NOx concentration detection apparatus (SN4) which is disposed in the exhaust passage (40) on the upstream side relative to the catalyst (42, 43) and configured to detect a NOx concentration in the exhaust gas, wherein
the control apparatus (100) is configured to estimate the amount of ammonia, which is adsorbed on the catalyst (42, 43), based on an amount of urea which is injected by the urea injector (45) and on the NOx concentration which is detected by the NOx concentration detection apparatus (SN4), and set the ammonia amount, which is estimated at an engine stop, as the initial adsorption amount at a next engine start.

5. The engine system (1) according to claim 4, wherein
the control apparatus (100) is configured to calculate an ammonia supply amount as an amount of ammonia which is supplied to the catalyst (42, 43) based on the amount of urea which is injected by the urea injector (45),
the control apparatus (100) is configured to calculate a NOx inflow amount as an amount of NOx which flows into the catalyst (42, 43) based on the NOx concentration,
the control apparatus (100) is configured to calculate an ammonia consumption amount as an amount of ammonia which is consumed for reducing the Nox based on the NOx inflow amount, and
the control apparatus (100) is configured to calculate the amount of ammonia, which is adsorbed on the catalyst (42, 43), by subtracting the ammonia consumption amount from the ammonia supply amount.

6. The engine system (1) according to claim 5, wherein
the control apparatus (100) is configured to calculate the ammonia supply amount to be larger as the amount of ammonia which is supplied to the catalyst (42, 43) becomes larger, and/or
the control apparatus (100) is configured to calculate the ammonia consumption amount to be larger as the NOx inflow amount becomes larger.

7. The engine system (1) according to claim 5 or 6, wherein
the control apparatus (100) is configured to calculate an ammonia remaining amount by subtracting the ammonia consumption amount from the ammonia supply amount, and
the control apparatus (100) is configured to calculate the amount of ammonia, which is adsorbed on the catalyst (42, 43), by integrating the ammonia remaining.

8. The engine system (1) according to any one of claims 5 to 7, wherein
the control apparatus (100) is configured to calculate the NOx inflow amount based on the NOx concentration and an amount of the exhaust gas.

9. The engine system (1) according to any one of the preceding claims, wherein
the adjustment apparatus (9) is a fuel injector.

10. A method of controlling an engine system (1), the engine system (1) comprising:
an adjustment apparatus (9) which is configured to adjust an engine output or engine torque; and
a catalyst (42, 43) which is configured to adsorb ammonia and reduces NOx in exhaust gas by using the ammonia, the method comprising:
carrying out restriction control in a case where a temperature of the catalyst (42, 43) is lower than a predetermined determination catalyst temperature, such that an upper limit value of the engine output or the engine torque is set to a lower value than a maximum value and the engine output or the engine torque is equal to or lower than the upper limit value; and
in carrying out the restriction control, setting the upper limit value to a lower value as an initial adsorption amount, which is an amount of ammonia adsorbed on the catalyst (42, 43) at an engine start, becomes smaller.

11. The method according to claim 10, further comprising setting a target adsorption amount as a target value of the amount of ammonia to be adsorbed on the catalyst (42, 43), wherein
when the restriction control is carried out and the initial adsorption amount is smaller than the target adsorption amount, the upper limit value is set to a value lower than a value which is set when the initial adsorption amount is equal to or greater than the target adsorption amount, and the upper limit value is made lower as the initial adsorption amount becomes smaller.

12. The method according to claim 10 or 11, wherein
the upper limit value becomes lower as the temperature of the catalyst (42, 43) becomes lower.

13. The method according to any one of claims 10 to 12,
where in the engine system (1) further comprises a urea injector (45) which is configured to inject urea into an exhaust passage (40) on an upstream side relative to the catalyst (42, 43), and
the method further comprises:
detecting a NOx concentration in the exhaust gas by a NOx concentration detection apparatus (SN4) which is disposed in the exhaust passage (40) on the upstream side relative to the catalyst (42, 43);
estimating the amount of ammonia, which is adsorbed on the catalyst (42, 43), based on an amount of urea which is injected by the urea injector (45) and on the NOx concentration which is detected by the NOx concentration detection apparatus (SN4); and
setting the ammonia amount, which is estimated at an engine stop, as the initial adsorption amount at a next engine start.

14. The method according to claim 13, further comprising:
calculating an ammonia supply amount as an amount of ammonia which is supplied to the catalyst (42, 43) based on the amount of urea which is injected by the urea injector (45) ;
calculating a NOx inflow amount as an amount of NOx which flows into the catalyst (42, 43) based on the NOx concentration;
calculating an ammonia consumption amount as an amount of ammonia which is consumed for reducing the Nox based on the NOx inflow amount, wherein
the amount of ammonia, which is adsorbed on the catalyst (42, 43), is calculated by subtracting the ammonia consumption amount from the ammonia supply amount.

15. A computer program product storing a program for performing the method according to any one of claims 10 to 14 when executed by a computer.
